# EUROPÄISCHE PATENTSCHRIFT

(11) **EP 1 493 952 B1**
(45) Veröffentlichungstag und Bekanntmachung des Hinweises auf die Patenterteilung: **26.04.2006**
(21) Anmeldenummer: 04013296.1
(22) Anmeldetag: 05.06.2004
(51) Int. Cl.: F16K 27/04

(54) **Ventilanordnung**
Valve arrangement
Soupape

(30) Priorität: 03.07.2003 DE 10329968
(43) Veröffentlichungstag der Anmeldung: 05.01.2005
(73) Patentinhaber: FESTO AG & Co, 73734 Esslingen (DE)
(72) Erfinder: Hesser, Robert, 73240 Wendlingen (DE); Linden, Rolf, Dr., 73249 Wernau (DE); Mack, Reinhold, 73773 Aichwald (DE); Zindl, Manfred, 72768 Reutlingen (DE)
(74) Vertreter: Abel, Martin

(56) Entgegenhaltungen:
- DE-A- 3 408 815
- US-A- 3 435 851
- US-A- 4 022 425
- US-A- 4 770 210
- US-A- 5 078 179

## Beschreibung

Die Erfindung betrifft eine Ventilanordnung, mit einem länglichen Mehrwegeventil, das mit einer Grundfläche an die Bestückungsfläche einer mit Anschlussplattenkanälen ausgestatteten Anschlussplatte ansetzbar ist und das einen in einer Schieberaufnahme des Ventilgehäuses längs verstellbar angeordneten Kolbenschieber aufweist, wobei in die Schieberaufnahme an axial beabstandeten Stellen seitlich mehrere Ventilkanäle einmünden, die andererseits zu der Grundfläche ausmünden und unter denen sich ein mit einer Speisekanalausmündung zur Grundfläche ausmündender Speisekanal und ein Entlüftungskanal befinden, wobei das Ventilgehäuse eine durch das Zentrum der Schieberaufnahme verlaufende, zu der Grundfläche senkrechte Hochachse aufweist und wobei der Speisekanal mit einer Zuströmöffnung in die Schieberaufnahme einmündet, deren Zentrum in der Breitenrichtung des Ventils zu der Hochachse versetzt ist, wobei der Speisekanal in seinem sich an die Zuströmöffnung anschließenden Endabschnitt mit Strömungsleitflächen versehen ist, die die ankommende Fluidströmung so leiten, dass sie in radialer Richtung auf den Kolbenschieber auftrifft.

Sogenannte 4/2-Wegeventile verfügen in der Regel über ein Ventilgehäuse, in dem sich eine längs erstreckende Schieberaufnahme befindet, in der ein zwischen zwei Stellungen umschaltbarer Kolbenschieber angeordnet ist. In die Schieberaufnahme münden fünf Ventilkanäle, bei denen es sich um einen Speisekanal, zwei Arbeitskanäle und zwei Entlüftungskanäle handelt. Die mit der Schieberaufnahme kommunizierenden Abströmöffnungen der beiden Entlüftungskanäle befinden sich auf einander entgegengesetzten Seiten der dazwischen angeordneten Zuströmöffnung des Speisekanals. Während der Speisekanal und die beiden Arbeitskanäle jeweils zur Außenfläche des Ventilgehäuses ausmünden, ist von den beiden Entlüftungskanälen nur einer direkt zur Außenfläche des Ventilgehäuses geführt, während der andere innerhalb des Ventilgehäuses mit dem erstgenannten Entlüftungskanal verbunden ist. Um diese Verbindung herzustellen, passiert der Entlüftungskanal den Speisekanal seitlich mit zur Schieberaufnahme parallelem Verlauf. Ein derartiges Ventilkonzept ist beispielsweise in dem Fachbuch "Pneumatische Steuerungen", Werner Deppert / Dipl.-Ing. Kurt Stoll, Vogel Buchverlag, 10. Auflage 1994, S. 131, beschrieben.

In der Praxis ergibt sich häufig die Anforderung, das Mehrwegeventil so auszubilden, dass es mit einer Grundfläche an der Bestückungsfläche einer Anschlussplatte montiert werden kann. Gleichzeitig soll die Baubreite des Ventils unter Einhaltung guter Durchflusswerte möglichst gering sein. Hier tritt beim Stand der Technik das Problem auf, dass die Baubreite des Ventils aufgrund der Notwendigkeit, einen Entlüftungskanal innerhalb des Ventilgehäuses am Speisekanal vorbeizuführen, nicht beliebig verringert werden kann. Zwar wäre es denkbar, den Speisekanal außermittig im Ventilgehäuse zu platzieren, um den Entlüftungskanal unterhalb der Schieberaufnahme am Speisekanal vorbeiführen zu können. Wie sich jedoch gezeigt hat, ist dies mit starken Einbußen bei der Durchflussrate des Ventils verbunden.

Die US-A-3 435 851 offenbart eine Ventilanordnung der eingangs genannten Art, bei der der Speisekanal außermittig im ventilgehäuse verläuft und mit einer seitlich versetzten Zuströmöffnung in die Schieberaufnahme einmündet. In dem sich an die Schieberaufnahme anschließenden Endabschnitt des Speisekanals befinden sich Strömungsleitflächen, die das Fluid zentral zum Ventilschieber leiten. Die an der Grundfläche des Ventilgehäuses liegende Speisekanalausmündung ist seitlich versetzt zur Schieberaufnahme angeordnet. Vergleichbare Gegebenheiten treffen auf die in der US-A-4 022 425 beschriebene Ventilanordnung zu.

Es ist die Aufgabe der vorliegenden Erfindung, Maßnahmen zu treffen, die trotz kompakter Breitenabmessungen hohe Durchflusswerte des Mehrwegeventils zulassen.

Gelöst wird diese Aufgabe bei einer Ventilanordnung der eingangs genannten Art dadurch, dass die Speisekanalausmündung mit in der Breitenrichtung des Ventils zur Hochachse versetztem Zentrum direkt unterhalb der Schieberaufnahme an der Grundfläche angeordnet ist, wobei der Entlüftungskanal mit einem zur Längserstreckung der Schieberaufnahme parallelen Umgehungs-Kanalabschnitt, ebenfalls auf der der Grundfläche zugewandten Unterseite der Schieberaufnahme, an dem Speisekanal vorbeigeführt ist.

Durch die seitlich versetzte Anordnung der Zuströmöffnung kann auch der Speisekanal entsprechend außermittig im Ventilgehäuse platziert werden, wobei das für den Speisekanal nicht genutzte Volumen des Ventilgehäuses verwendet werden kann, um den Entlüftungskanal mit zur Schieberaufnahme etwa parallelem Verlauf daran vorbeizuführen. Dadurch kann die Möglichkeit geschaffen werden, die vom Speisekanal und vom vorbeigeführten Entlüftungskanal beanspruchte Baubreite nicht unwesentlich größer auszuführen als den Durchmesser der Schieberaufnahme. Damit verbunden sind sehr kompakte Abmessungen des Mehrwegeventils in seiner Breitenrichtung. Dass trotz dieser außenmittigen Platzierung der Zuströmöffnung gute Durchflusswerte zu verzeichnen sind, hängt mit den getroffenen Strömungsleitmaßnahmen zusammen. Diese bewirken, dass das zuströmende Fluid nicht tangential zum Kolbenschieber einströmt, sondern über eine signifikante radiale Komponente mit Bezug zur Längsachse des Kolbenschiebers verfügt, sodass die Fluidströmung etwa zentral auf den Kolbenschieber auftrifft und sich in mehrere, den Kolbenschieber beidseits umströmende Strömungskomponenten aufteilt. Hieraus resultiert eine gleichmäßigere Umströmung der Steuerkante des Kolbenschiebers (weniger Wirbel, kleinere Wirbelzonen und damit geringere Totaldruckverluste), mit der Folge, dass sich die den Durchfluss bestimmenden Schalldurchgangsflächen weiter stromaufwärts befinden und der dort herrschende Totaldruck in der strömung größer ausfällt und somit der Durchfluss merklich gesteigert wird. Trotz achsversetzter Zuströmung mit Bezug zur Hochachse des Ventils wird also erreicht, dass die Fluidströmung den Kolbenschieber gleichmäßiger umströmt und somit die Strömungsverluste infolge Strömungsablösung und Wirbelbildung verringert werden. Aufgrund der geringeren dissipativen Strömungsverluste können sich höhere Drücke und damit ein höherer Durchsatz ausbilden.

Die US-A-4,770,210 beschreibt eine Ventilanordnung mit einem Mehrwegventil, bei dem ein Ventilkanal außermittig in die Schieberaufnahme einmündet, wobei die außen liegende Kanalwand im Mündungsbereich abgewinkelt ist. Ein Hinweis auf damit möglicherweise verbundene bessere Durchflusswerte des Ventils wird allerdings nicht gegeben. Im übrigen handelt es sich bei dem betreffenden Ventilkanal nicht um einen der Schieberaufnahme Druckmedium zuführenden Speisekanal, sondern um einen Arbeitskanal, über den Druckmedium aus der Schieberaufnahme an einen Verbraucher abgeführt wird. Zu bemerken ist ferner, dass die Entlüftungskanäle durchweg rechtwinkelig zur Schieberaufnahme verlaufen und nicht parallel zu dieser.

Vorteilhafte Weiterbildungen der Erfindung gehen aus den Unteransprüchen hervor.

Zweckmäßigerweise verläuft der Speisekanal in dem den Strömungsleitflächen entgegen der Strömungsrichtung vorgelagerten Längenabschnitt geradlinig in der Höhenrichtung des Ventils.

Die in dem der Zuströmöffnung zugeordneten Endabschnitt des Speisekanals vorgesehenen Strömungsleitflächen können zumindest teilweise von den Wandflächen des Speisekanals gebildet sein. Besonders zweckmäßig ist hier eine Ausgestaltung, bei der die Wandflächen des Speisekanals zumindest an der dem vorbeilaufenden Entlüftungskanal entgegengesetzten Außenseite einen konkav gekrümmten Verlauf haben.

Zusätzlich oder alternativ können die Strömungsleitflächen zumindest teilweise von einem oder mehreren, im Speisekanal angeordneten Leitkörpern gebildet sein. Diese können beispielsweise als mit Bezug zur Höhenrichtung des Ventils schrägstehende Plättchen ausgeführt sein, die insbesondere einstückiger Bestandteil des Ventilgehäuses sind.

Besonders vorteilhaft ist die Erfindung in Verbindung mit einem eine 4/2-Ventilfunktion aufweisenden Mehrwegeventil. Hier kann sich unter den Ventilkanälen ein zweiter Entlüftungskanal befinden, der wie der Speisekanal zur Grundfläche ausmündet, wobei die Zuströmöffnung des Speisekanals axial zwischen den in die Schieberaufnahme einmündenden Abströmöffnungen der beiden Entlüftungskanäle platziert ist. Die Zuströmöffnung kann somit beidseits von jeweils einer der Abströmöffnungen flankiert werden. Der am Speisekanal vorbeigeführte erste Entlüftungskanal führt hierbei nicht direkt zur Grundfläche, sondern mündet innerhalb des Ventilgehäuses in den zweiten Entlüftungskanal ein. Dadurch sind beide Entlüftungskanäle an eine gemeinsame Entlüftungsmündung an der Grundfläche des Ventils angeschlossen, über die abwechselnd die Abluft zweier Arbeitskanäle des Ventils abgeführt werden kann.

Nachfolgend wird die Erfindung anhand der beiliegenden Zeichnung näher erläutert. In dieser zeigen:
- Fig. 1: einen Längsschnitt durch die erfindungsgemäße Ventilanordnung gemäß Schnittlinie I-I aus Fig. 2 und 3,
- Fig. 2: eine Unteransicht des Mehrwegeventils der Ventilanordnung aus Fig. 1 mit Blickrichtung gemäß Pfeil II,
- Fig. 3: einen Querschnitt durch das Mehrwegeventil der Ventilanordnung aus Fig. 1 gemäß Schnittlinie III-III und
- Fig. 4: eine der Fig. 3 entsprechende Querschnittsdarstellung bei einem modifizierten Mehrwegeventil.

Die in ihrer Gesamtheit mit Bezugsziffer 1 bezeichnete Ventilanordnung verfügt über ein längliche Gestalt aufweisendes Mehrwegeventil 2 und eine Anschlussplatte 3, die mit dem Mehrwegeventil 2 lösbar bestückbar ist.

Das Mehrwegeventil 2 verfügt über ein Ventilgehäuse 9 mit einem länglichen, bevorzugt im Wesentlichen rechteckigen Querschnitt. Eine seiner schmalseitigen Längsseiten bildet eine Grundfläche 4, mit der es im an der Anschlussplatte 3 montierten Zustand an einer Bestückungsfläche 5 der Anschlussplatte 3 anliegt. Das Mehrwegeventil 2 verfügt somit über eine parallel zur Grundfläche 4 verlaufende Längsachse 6, eine in der Breitenrichtung und gleichzeitig parallel zur Grundfläche 4, verlaufende Querachse 7 sowie eine zur Grundfläche 4 sowie zu den beiden anderen Achsen 6, 7 senkrechte Hochachse 8.

Im Innern des Ventilgehäuses 9 erstreckt sich in Richtung der Längsachse 6 eine Schieberaufnahme 12, die mit einem entsprechend ausgerichteten, längliche Gestalt aufweisenden Kolbenschieber 13 bestückt ist. Der Kolbenschieber 13 hat abwechselnd Längenabschnitte größeren (14) und kleineren (15) Durchmessers. Die Übergänge von den Längenabschnitten größeren Durchmessers 14 zu denjenigen kleineren Durchmessers 15 bilden ringsumlaufende Steuerkanten 16.

Durch mehrere, mit axialem Abstand zueinander angeordnete und den Kolbenschieber 13 konzentrisch umgebende Dichtungseinheiten 17 ist die Schieberaufnahme 12 in mehrere axial aufeinanderfolgende Steuerkammern 18 unterteilt. Insgesamt ergeben sich beim Ausführungsbeispiel fünf solcher Steuerkammern, wobei die außenliegenden an ihren äußeren Enden durch das Ventilgehäuse 9 begrenzt sind.

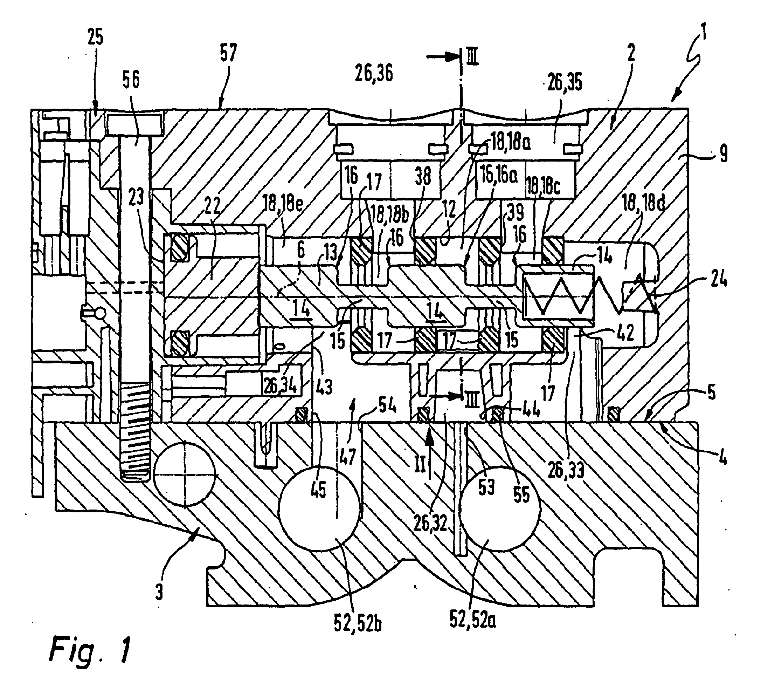

An den Kolbenschieber 13 schließt sich einenends ein Steuerkolben 22 an. Er begrenzt auf der der Schieberaufnahme 12 axial entgegengesetzten Außenseite eine Beaufschlagungskammer 23, die gesteuert mit einem unter Druck stehenden Fluid, insbesondere Druckluft, beaufschlagt werden kann. Auf der entgegengesetzten Seite des Kolbenschiebers 13 befindet sich eine Rückstellfeder 24, die zwischen dem Kolbenschieber 13 und dem Ventilgehäuse 9 wirksam ist und den Kolbenschieber 13 in Richtung der in Fig. 1 gezeigten Grundstellung vorspannt. In dieser Grundstellung hat die Beaufschlagungskammer 23 ihr minimales Volumen.

Durch eine nur teilweise angedeutete, elektrisch betätigbare Vorsteuereinheit 25 des Mehrwegeventils 2 kann die Druckbeaufschlagung der Beaufschlagungskammer 23 gesteuert werden, um den Steuerkolben 22 und mit diesem den Kolbenschieber 13 entgegen der Kraft der Rückstellfeder 24 in eine ausgelenkte Stellung, in Fig. 1 nach rechts, zu verlagern. Die Vorsteuereinheit 25 enthält zweckmäßigerweise ein elektrisch aktivierbares Vorsteuerventil, beispielsweise ein Magnetventil oder ein Piezo-Ventil.

Der Kolbenschieber könnte auch auf andere Weise verstellt und positioniert werden.

Je nach Schaltstellung des Kolbenschiebers 13 nehmen unterschiedliche der größeren Längenabschnitte 14 eine Stellung ein, in der sie in eine der Dichtungseinheiten 17 eintauchen, sodass sie von letzterer unter Abdichtung umschlossen sind. Die Dichtungseinheiten 17 sind im Übrigen unter Abdichtung am Ventilgehäuse 9 fixiert.

Auf diese Weise werden je nach Schaltstellung des Kolbenschiebers 13 unterschiedliche benachbarte Steuerkammern 18 voneinander abgetrennt oder, wenn sich ein Längenabschnitt kleineren Durchmessers 15 innerhalb der betreffenden Dichtungseinheit 17 befindet, miteinander fluidisch verbunden.

In die Schieberaufnahme 12 münden an axial beabstandeten Stellen seitlich mehrere Ventilkanäle 26 ein, beim Ausführungsbeispiel fünf Stück. Bei diesen Ventilkanälen 26 handelt es sich beispielsgemäß um einen Speisekanal 32, einen ersten und einen zweiten Entlüftungskanal 33, 34 sowie einen ersten und einen zweiten Arbeitskanal 35, 36. Die in die Schieberaufnahme 12 mündenden Öffnungen dieser Ventilkanäle 26 münden in unterschiedliche Steuerkammern 18. Beim Ausführungsbeispiel mündet der Speisekanal 32 mit seiner Zuströmöffnung 37 in die mittlere Steuerkammer 18a. Die beiden Arbeitskanäle 35, 36 münden jeweils mit einer Arbeitsöffnung 38, 39 in die die mittlere Steuerkammer 18a axial beidseits flankierenden Steuerkammern 18b, 18c. In die beiden äußeren Steuerkammern 18d, 18e schließlich mündet je einer der beiden Entlüftungskanäle 33, 34 mit einer ersten und zweiten Abströmöffnung 42, 43.

Der Speisekanal 32 und die beiden Entlüftungskanäle 33, 34 befinden sich auf der der Grundfläche 4 zugewandten Längsseite der Schieberaufnahme 12. Sie kommunizieren mit in der Anschlussplatte 3 ausgebildeten Anschlussplattenkanälen 52. In diesem Zusammenhang befindet sich an der Grundfläche 4 eine zum Speisekanal 32 gehörende Speisekanalmündung 44. Außerdem ist in der Grundfläche 4 eine zur Speisekanalmündung 44 axial beabstandete Entlüftungskanalmündung 45 vorgesehen, die mit beiden Entlüftungskanälen 33, 34 verbunden ist. Während der zweite Entlüftungskanal 34 in der Höhenrichtung des Ventilgehäuses 9 verläuft und unmittelbar eine Verbindung zwischen der zugeordneten zweiten Abströmöffnung 43 und der Entlüftungskanalmündung 45 herstellt, läuft der von der ersten Abströmöffnung 42 ausgehende erste Entlüftungskanal 33 mit einem zur Schieberaufnahme 12 parallelen Umgehungs-Kanalabschnitt 46 seitlich am Speisekanal 32 vorbei und mündet in einem Mündungsbereich 47 innerhalb des Ventilgehäuses 9 in den zweiten Entlüftungskanal 34 ein.

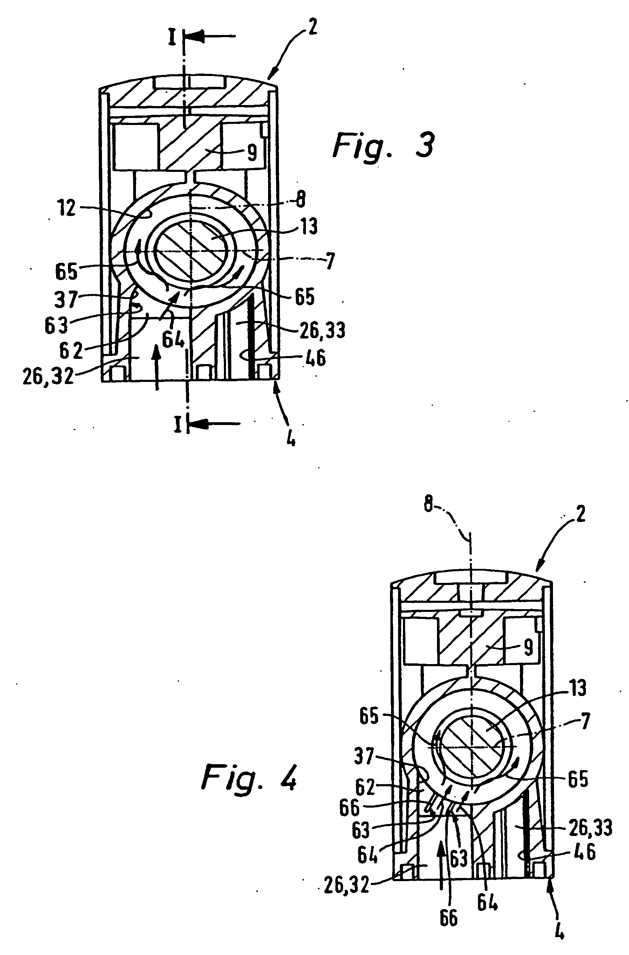

Um dies zu ermöglichen, sind der Speisekanal 32 und die zu diesem gehörende Zuströmöffnung 37 mit Bezug zur Breitenrichtung des Ventilgehäuses 9 außermittig im Ventilgehäuse 9 angeordnet, wie dies aus Fig. 3 und 4 exemplarisch hervorgeht. Es ergibt sich dadurch neben dem Speisekanal 32 ausreichend Platz im Ventilgehäuse 9, um den Umgehungs-Kanalabschnitt 46 daran in der Längsrichtung des Ventilgehäuses 9 vorbeiführen zu können.

Aus Fig. 3 und 4 wird deutlich, dass der Speisekanal 32 und der neben diesem angeordnete Umgehungs-Kanalabschnitt 46 nicht mehr Platz beanspruchen als den Durchmesser der Schieberaufnahme 12.

Einer der Anschlussplattenkanäle 52 ist ein Zufuhrkanal 52a. Über ihn wird das vom Mehrwegeventil 2 zu steuernde Druckmedium zugeführt, wobei es sich insbesondere um Druckluft handelt. Allerdings wäre auch ein Betrieb mit einem anderen gasförmigen Medium oder mit einem hydraulischen Medium möglich. Der Zufuhrkanal 52a mündet an der Bestückungsfläche 5 mit einer Zufuhrkanalöffnung 53, die der Speisekanalmündung 44 gegenüberliegt, sodass eine fluidische Verbindung hergestellt ist.

Ein anderer Anschlussplattenkanal 52 ist ein Abfuhrkanal 52b, über den verbrauchtes Druckmedium abgeführt wird. Er mündet zur Bestückungsfläche 5 mit einer Abfuhrkanalöffnung 54 aus, die der Entlüftungskanalmündung 45 gegenüberliegt, sodass beide Entlüftungskanäle 33, 34 gleichzeitig an den Abfuhrkanal 52b angeschlossen sind. Eine an der Grundfläche 4 des Ventilgehäuses 9 vorgesehene Dichtung 55 sorgt für einen abgedichteten Fluidübertritt bei an der Anschlussplatte 3 montiertem Mehrwegeventil 2. Zur Befestigung dienen geeignete Befestigungsmittel 56, beispielsweise mindestens eine Befestigungsschraube.

Die Arbeitskanäle 35, 36 münden zweckmäßigerweise zu der der Grundfläche entgegengesetzten Außenfläche 57 des Ventilgehäuses 9 aus. Ihre Mündungen können mit nicht näher dargestellten Anschlussmitteln ausgestattet werden, die den insbesondere lösbaren Anschluss von Fluidleitungen gestatten, die zu einem anzusteuernden Verbraucher führen, beispielsweise zu einem durch Fluidkraft betätigbaren Antrieb.

Das Mehrwegeventil 2 des Ausführungsbeispiel ist ein 4/2-Wegeventil. In der aus Fig. 1 hervorgehenden Grundstellung des Kolbenschiebers 13 steht der Speisekanal 32 mit dem ersten Arbeitskanal 35 in Verbindung, während gleichzeitig der zweite Arbeitskanal 36 mit dem zweiten Entlüftungskanal 34 verbunden ist. In der anderen, nicht dargestellten Schaltstellung des Kolbenschiebers 13 kommuniziert der zweite Arbeitskanal 36 mit dem Speisekanal 32, während der erste Arbeitskanal 35 mit dem ersten Entlüftungskanal 33 verbunden ist. In beiden Fällen erfolgt die Entlüftung über die gemeinsame Entlüftungskanalmündung 45.

Letztere ist beim Ausführungsbeispiel von einem Teilbereich einer U-ähnlichen Vertiefung 58 gebildet, die in der Grundfläche 4 ausgebildet ist und die sich um die Speisekanalmündung 44 herum erstreckt. Die in Höhenrichtung gemessene Tiefe der U-ähnlichen Vertiefung 58 entspricht annähernd der Höhe des in Höhenrichtung verlaufenden Speisekanals 32, sodass folglich auch dieser von der Vertiefung 58 umgriffen wird.

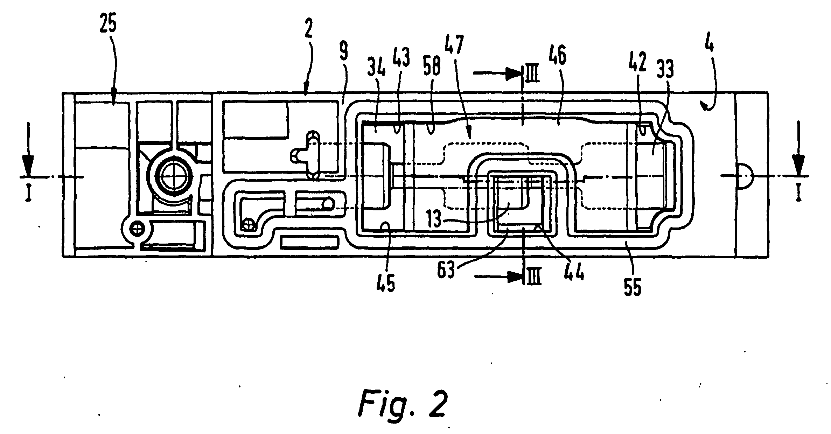

Im an die Anschlussplatte 3 angesetzten Zustand des Mehrwegeventils 2 wird die U-ähnliche Vertiefung 58 von der Bestückungsfläche 5 so überdeckt, dass nur die Verbindung zur Abfuhrkanalöffnung 54 offen bleibt. Während sich die den U-Schenkeln entsprechenden Bestandteile der U-ähnlichen Vertiefung 58 jeweils auf axialer Höhe mit einer Abströmöffnung 42, 43 befinden, bildet der dazwischen verlaufende, dem Verbindungsglied der beiden U-Schenkel entsprechende Abschnitt der U-ähnlichen Vertiefung 58 den Umgehungs-Kanalabschnitt 46. Dies ist insbesondere aus Fig. 2 ersichtlich.

In seinem sich entgegen der Strömungsrichtung an die Zuströmöffnung 37 anschließenden Endabschnitt 62 ist der Speisekanal 32 mit Strömungsleitflächen 63 versehen. Diese sind so ausgebildet, dass die durch den Speisekanal 32 hindurch in die Schieberaufnahme 12 zuströmende Fluidströmung so geleitet ist, dass sie in radialer Richtung etwa zentral auf den Kolbenschieber 13 auftrifft, wie dies durch die Strömungspfeile 6.4 in Fig. 3 und 4 angedeutet ist.

Diese Anströmung hat zur Folge, dass sich die Fluidströmung in mehrere sich in beiden Richtungen um den Kolbenschieber 13 herum verteilende Strömungskomponenten aufteilt, wie dies bei 65 durch Pfeile angedeutet ist. Dies führt zu einer relativ gleichmäßigen Umströmung der momentan in der mittleren Steuerkammer 18a liegenden Steuerkante 16a des Kolbenschiebers 13, mit der Folge einer optimierten Fluidübertrittsrate zu der sich anschließenden, mit einem der Arbeitskanäle verbundenen Steuerkammern 18b bzw. 18c.

In dem sich entgegen der Strömungsrichtung an den Endabschnitt 62 anschließenden Längenabschnitt verfügt der Speisekanal zweckmäßigerweise über einen in Höhenrichtung 8 des Ventilgehäuses 9 geradlinigen Verlauf.

Beim Ausführungsbeispiel der Fig. 3 sind die Strömungsleitflächen 63 ausschließlich von den entsprechend gestalteten Wandflächen des Speisekanals 32 gebildet. So ist beim Ausführungsbeispiel der Fig. 3 die dem am Speisekanal 32 vorbeilaufenden Umgehungs-Kanalabschnitt 46 zugewandte Wandfläche des Endabschnittes 62 des Speisekanals 32 konkav gekrümmt. Sie ist daher für die Umlenkung der bezüglich des Kolbenschiebers 13 tangential ankommenden Fluidströmung in die radiale Richtung maßgeblich verantwortlich.

Die übrigen Wandflächen können in diesem Falle ungekrümmt sein und in geradliniger Verlängerung des Speisekanals 32 in die Schieberaufnahme 12 übergehen.

Möglich wäre aber beispielsweise auch eine dahingehende Gestaltung der Wandflächen, dass sich der Speisekanal 32 zur Zuströmöffnung 37 hin düsenartig verjüngt.

Bei der in Fig. 4 gezeigten alternativen Bauform sind die Strömungsleitflächen 63 von mehreren im Speisekanal 32 angeordneten Leitkörpern 66 gebildet. Anstelle der in Fig. 4 gezeigten zwei Leitkörper 66 ist auch eine größere Anzahl von Leitkörpern 66 oder nur ein einziger Leitkörper möglich.

Sofern mehrere Leitkörper 66 nebeneinander angeordnet sind, empfiehlt sich eine parallele Ausrichtung zueinander.

Da beim Ausführungsbeispiel der Fig. 4 das zuströmende Druckmedium mit Bezug zum Kolbenschieber 13 in tangentialer Richtung ankommt, sind die Leitkörper 66 derart schräg platziert, dass die Strömungsleitflächen 63 mit Bezug zur Höhenrichtung 8 des Ventilgehäuses 9 einen schrägen Verlauf haben.

Die Leitkörper 66 können insbesondere die Gestalt von Plättchen haben, wobei aber auch andere geeignete Formgebungen möglich sind.

Die Leitkörper 66 sind zweckmäßigerweise einstückiger Bestandteil des Ventilgehäuses 9, sodass sie bei dessen Herstellung unmittelbar angeformt werden können.

Während beim Ausführungsbeispiel der Fig. 4 die Strömungsleitflächen 63 ebene Flächen sind, die lediglich mit Bezug zur Hochachse 8 schräg positioniert sind, könnten sie selbstverständlich auch als gekrümmte Flächen ausgeführt werden.

Es besteht ferner die Möglichkeit, die Strömungsleitflächen 63 sowohl an den Wandflächen des Speisekanals 32 als auch durch in den Verlauf des Speisekanals 32 eingeschaltete Leitkörper 66 zu realisieren.

## Patentansprüche

1. Ventilanordnung, mit einem länglichen Mehrwegeventil (2), das mit einer Grundfläche (4) an die Bestückungsfläche (5) einer mit Anschlussplattenkanälen (52) ausgestatteten Anschlussplatte (3) ansetzbar ist und das einen in einer Schieberaufnahme (12) des ventilgehäuses (9) längs verstellbar angeordneten Kolbenschieber (13) aufweist, wobei in die Schieberaufnahme (12) an axial beabstandeten Stellen seitlich mehrere Ventilkanäle (26) einmünden, die andererseits zu der Grundfläche (4) ausmünden und unter denen sich ein mit einer Speisekanalausmündung (44) zur Grundfläche (4) ausmündender Speisekanal (32) und ein Entlüftungskanal (33) befinden, wobei das Ventilgehäuse (9) eine durch das Zentrum der Schieberaufnahme (12) verlaufende, zu der Grundfläche (4) senkrechte Hochachse (8) aufweist und wobei der Speisekanal (32) mit einer Zuströmöffnung (37) in die Schieberaufnahme (12) einmündet, deren Zentrum in der Breitenrichtung des Ventils zu der Hochachse (8) versetzt ist, wobei der Speisekanal (32) in seinem sich an die Zuströmöffnung (37) anschließenden Endabschnitt (62) mit Strömungsleitflächen (63) versehen ist, die die ankommende Fluidströmung so leiten, dass sie in radialer Richtung auf den Kolbenschieber (13) auftrifft, **dadurch gekennzeichnet, dass** die Speisekanalausmündung (44) mit in der Breitenrichtung des Ventils zur Hochachse (8) versetztem Zentrum direkt unterhalb der Schieberaufnahme (12) an der Grundfläche (4) angeordnet ist, wobei der Entlüftungskanal (33) mit einem zur Längserstreckung der Schieberaufnahme (12) parallelen Umgehungs-Kanalabschnitt (46), ebenfalls auf der der Grundfläche (4) zugewandten Unterseite der Schieberaufnahme (12), an dem Speisekanal (32) vorbeigeführt ist.

2. Ventilanordnung nach Anspruch 1, **dadurch gekennzeichnet, dass** der Speisekanal (32) in dem den Strömungsleitflächen (63) entgegen der Strömungsrichtung vorgelagerten Längenabschnitt geradlinig in Höhenrichtung des Ventils verläuft.

3. Ventilanordnung nach Anspruch 1 oder 2, **dadurch gekennzeichnet, dass** die Strömungsleitflächen (63) zumindest teilweise von Wandflächen des Speisekanals (32) gebildet sind.

4. Ventilanordnung nach Anspruch 3, **dadurch gekennzeichnet, dass** die dem am Speisekanal (32) vorbeilaufenden Umgehungs-Kanalabschnitt (46) des Entlüftungskanals (33) zugewandten Wandflächen des Speisekanals (32) zur Bildung einer Strömungsleitfläche (63) einen konkav gekrümmten Verlauf haben.

5. Ventilanordnung nach einem der Ansprüche 1 bis 4, **dadurch gekennzeichnet, dass** die Strömungsleitflächen (63) zumindest teilweise von mindestens einem im Speisekanal (32) angeordneten Leitkörper (66) gebildet sind.

6. Ventilanordnung nach Anspruch 5, **gekennzeichnet durch** mehrere, nebeneinander angeordnete Leitkörper (66).

7. Ventilanordnung nach Anspruch 5 oder 6, **dadurch gekennzeichnet, dass** der mindestens eine Leitkörper (66) als mit Bezug zur Höhenrichtung (8) des Ventils schrägstehendes plättchenartiges Element ausgeführt ist.

8. ventilanordnung nach einem der Ansprüche 1 bis 7, **dadurch gekennzeichnet, dass** sich unter den Ventilkanälen (26) ein zweiter Entlüftungskanal (34) befindet, der zur Grundfläche (4) ausmündet, wobei die Zuströmöffnung (37) axial zwischen den in die Schieberaufnahme (12) einmündenden Abströmöffnungen (42, 43) der beiden Entlüftungskanäle (33, 34) liegt und wobei der andere, erste Entlüftungskanal (33) innerhalb des Ventilgehäuses (9) über seinen den Speisekanal (32) passierenden Umgehungs-Kanalabschnitt (46) mit dem zweiten Entlüftungskanal (34) in Verbindung steht.

9. Ventilanordnung nach Anspruch 8, **dadurch gekennzeichnet, dass** sich unter den Ventilkanälen (26) zwei Arbeitskanäle (35, 36) befinden, wobei der Kolbenschieber (13) zwei Schaltstellungen einnehmen kann, in denen jeweils der eine Arbeitskanal mit dem Speisekanal (32) und der andere Arbeitskanal mit einem der beiden Entlüftungskanäle (33, 34) verbunden ist.

10. Ventilanordnung nach Anspruch 8 oder 9, **dadurch gekennzeichnet, dass** die an der Grundfläche (4) vorgesehene Speisekanalmündung (44) von einer zur Grundfläche (4) hin offenen U-ähnlichen Vertiefung (58) umschlossen ist, die die Verbindung zwischen den beiden Entlüftungskanälen (33, 34) herstellt.

11. Ventilanordnung nach Anspruch 9 oder 10, **dadurch gekennzeichnet, dass** die Arbeitskanäle (35, 36) zu der der Grundfläche (4) entgegengesetzten Außenfläche (57) des Ventils ausmünden.

## Claims

1. Valve assembly with an elongated multiway valve (2), which may be attached by a base (4) to the mounting surface (5) of a connection plate (3) equipped with connection plate passages (52), and which has a cylindrical slide valve (13) mounted so as to be longitudinally adjustable in a slide mount (12) of the valve casing (9), wherein several valve passages (26) lead into the slide mount (12) at axially spaced-apart points at the side, to emerge at the other end at the base (4), said passages including a feed passage (32) emerging at the base (4) with a feed passage outlet (44) and a vent passage (33), wherein the valve casing (9) has a vertical axis (8) running through the centre of the slide mount (12) at right-angles to the base (4), and wherein the feed passage (32) leads into the slide mount (12) with an inflow port (37), the centre of which is offset relative to the vertical axis (8) in the direction of the width of the valve, wherein the feed passage (32) is provided in its end section (62) adjoining the inflow port (37) with flow deflectors (63) which direct the incoming fluid flow so that it strikes the cylindrical slide valve (13) in the radial direction, **characterised in that** the feed passage outlet (44) is provided on the base (4), directly beneath the slide mount (12), with its centre offset towards the vertical axis (8) in the direction of the width of the valve, wherein the vent passage (33) is guided past the feed passage (32) by a bypass passage section (46) parallel to the longitudinal extent of the slide mount (12) and similarly on the underside of the slide mount (12) facing the base (4).

2. Valve assembly according to claim 1, **characterised in that** the feed passage (32), in the length section upstream of the flow deflectors (63), against the direction of flow, runs in a straight line in the vertical direction of the valve.

3. Valve assembly according to claim 1 or 2, **characterised in that** the flow deflectors (63) are formed at least partly by wall surfaces of the feed passage (32).

4. Valve assembly according to claim 3, **characterised in that** the wall surfaces of the feed passage (32) facing the bypass passage section (46) of the vent passage (33) which runs past the feed passage (32) have a concave curved shape to form a flow deflector (63).

5. Valve assembly according to any of claims 1 to 4, **characterised in that** the flow deflectors (63) are formed at least partly by one or more guide bodies (66) located in the feed passage (32).

6. Valve assembly according to claim 5, **characterised by** several guide bodies (66) arranged adjacent to one another.

7. Valve assembly according to claim 5 or 6, **characterised in that** the guide body or bodies (66) are in the form of a wafer-like element or elements placed at an angle relative to the vertical axis (8) of the valve.

8. Valve assembly according to any of claims 1 to 7, **characterised in that** the valve passages (26) include a second vent passage (34) which emerges at the base (4), while the inflow port (37) lies axially between the outflow ports (42, 43) of the two vent passages (33, 34) leading into the slide mount (12), and the other, first vent passage (33) within the valve casing (9) is connected to the second vent passage (34) via its bypass passage section (46) which passes the feed passage (32).

9. Valve assembly according to claim 8, **characterised in that** the valve passages (26) include two operating passages (35, 36), with the cylindrical slide valve (13) being able to assume two switching positions in each of which the one operating passage is connected to the feed passage (32) and the other operating passage is connected to one of the two vent passages (33, 34).

10. Valve assembly according to claim 8 or 9, **characterised in that** the feed passage outlet (44) provided at the base (4) is surrounded by a U-shaped recess (58) open towards the base (4), which makes the connection between the two vent passages (33, 34).

11. Valve assembly according to claim 9 or 10, **characterised in that** the operating passages (35, 36) emerge at the outer surface (57) of the valve opposite the base (4).

## Revendications

1. Agencement de soupape avec une soupape à plusieurs voies (2) allongée qui peut être placée, par une surface de base (4), sur la surface d'équipement (5) d'une plaque de raccordement (3) équipée de canaux de plaque de raccordement (52), et qui comporte un tiroir à piston (13) disposé dans un logement de tiroir (12) du boîtier de soupape (9) de manière à pouvoir se déplacer longitudinalement, dans le logement de tiroir (12) en des emplacements espacés axialement débouchant latéralement plusieurs canaux de soupape (26) qui débouchent d'autre part vers la surface de base (4) et au-dessous desquels se trouvent un canal d'alimentation (32) débouchant par une embouchure de canal d'alimentation (44) vers la surface de base (4), ainsi qu'un canal de purge (33), le boîtier de soupape (9) présentant un axe vertical (8) perpendiculaire à la surface de base (4) et passant par le centre du logement de tiroir (12), et le canal d'alimentation (32) débouchant dans le logement de tiroir (12), par une ouverture d'arrivée (37) dont le centre est décalé par rapport à l'axe vertical (8) dans le sens de la largeur de la soupape, le canal d'alimentation (32) étant pourvu de surfaces de guidage du courant (63) dans son tronçon terminal (62) se raccordant à l'ouverture d'arrivée (37), lesquelles surfaces (63) guident le courant de fluide arrivant de manière qu'il parvienne dans la direction radiale sur le tiroir à piston (13), **caractérisé en ce que** l'embouchure de canal d'alimentation (44) est disposée, avec son centre décalé par rapport à l'axe vertical (8) dans le sens de la largeur de la soupape, directement au-dessous du logement de tiroir (12), sur la surface de base (4), le canal de purge (33) passant devant le canal d'alimentation (32), par un tronçon de canal de contournement (46), parallèle à l'étendue longitudinale du logement de tiroir (12), également sur le côté inférieur du logement de tiroir (12), tournée vers la surface de base (4).

2. Agencement de soupape selon la revendication 1, **caractérisé en ce que** le canal d'alimentation (32) s'étend en ligne droite dans le sens de la hauteur de la soupape, dans le tronçon de longueur placé devant les surfaces de guidage du courant (63), dans le sens contraire au sens d'écoulement.

3. Agencement de soupape selon la revendication 1 ou 2, **caractérisé en ce que** les surfaces de guidage du courant (63) sont formées au moins en partie par des surfaces de paroi du canal d'alimentation (32).

4. Agencement de soupape selon la revendication 3, **caractérisé en ce que** les surfaces de paroi du canal d'alimentation (32), tournées vers le tronçon de canal de contournement (46) du canal de purge d'air (33), passant devant le canal d'alimentation (32), présentent une allure concave pour former une surface de guidage du courant (63).

5. Agencement de soupape selon l'une des revendications 1 à 4, **caractérisé en ce que** les surfaces de guidage du courant (63) sont formées au moins en partie par au moins un corps de guidage (66) disposé dans le canal d'alimentation (32).

6. Agencement de soupape selon la revendication 5, **caractérisé par** plusieurs corps de guidage (66) disposés côte à côte.

7. Agencement de soupape selon la revendication 5 ou 6, **caractérisé en ce que** le au moins un corps de guidage (66) est réalisé en tant qu'élément de type plaquette orienté obliquement par rapport à la direction de la hauteur (8) de la soupape.

8. Agencement de soupape selon l'une des revendications 1 à 7, **caractérisé en ce qu'**au-dessous des canaux de soupape (26) se trouve un deuxième canal de purge (34) qui débouche vers la surface de base (4), l'ouverture d'arrivée (37) se situant axialement entre les ouvertures de départ (42, 43), débouchant dans le logement de tiroir (12), des deux canaux de purge (33, 34), et l'autre, à savoir le premier canal de purge (33) communiquant avec le deuxième canal de purge (34), à l'intérieur du boîtier de soupape (9), par son tronçon de canal de contournement (46) passant devant le canal d'alimentation (32).

9. Agencement de soupape selon la revendication 8, **caractérisé en ce qu'**au-dessous des canaux de soupape (26) se trouvent deux canaux de travail (35, 36), le tiroir à piston (13) pouvant prendre deux positions de commutation dans chacune desquelles un canal de travail communique avec le canal d'alimentation (32) et l'autre canal de travail communique avec l'un des deux canaux de purge (33, 34).

10. Agencement de soupape selon la revendication 8 ou 9, **caractérisé en ce que** l'embouchure de canal d'alimentation (44), prévue sur la surface de base (4), est entourée par un renfoncement (58) de type en U ouvert vers la surface de base (4), lequel réalise la communication entre les deux canaux de purge (33, 34).

11. Agencement de soupape selon la revendication 9 ou 10, **caractérisé en ce que** les canaux de travail (35, 36) débouchent vers la surface extérieure (57) de la soupape, opposée à la surface de base (4).
